# EUROPÄISCHE PATENTSCHRIFT

(11) **EP 2 498 356 B1**
(45) Veröffentlichungstag und Bekanntmachung des Hinweises auf die Patenterteilung: **29.04.2015**
(21) Anmeldenummer: 11157210.3
(22) Anmeldetag: 07.03.2011
(51) Int. Cl.: H02G 3/08

(54) **Diebstahlsicherungsvorrichtung für ein an der Wand befestigbares System**
Theft protection device for a system that can be fixed to the wall
Dispositif de protection contre le vol pour un système pouvant être fixé sur un mur

(43) Veröffentlichungstag der Anmeldung: 12.09.2012
(73) Patentinhaber: Siemens Schweiz AG, 8047 Zürich (CH)
(72) Erfinder: Riesen, Dominik, 6006, Luzern (CH)
(74) Vertreter: Maier, Daniel Oliver

(56) Entgegenhaltungen:
- FR-A1- 2 847 733
- FR-A1- 2 908 562
- US-A- 5 744 750
- US-A1- 2007 256 850
- US-B1- 6 833 505

## Beschreibung

### Technisches Gebiet

Die vorliegende Erfindung betrifft eine Einrichtung zur diebstahlsicheren Fixierung eines Frontmoduls an einem an einer Wand befestigbaren Trägermodul. Ferner betrifft die vorliegende Erfindung eine Anordnung und ein System zum Befestigen an einer Wand. Ferner betrifft die vorliegende Erfindung ein Verfahren zum diebstahlsicheren Fixieren eines Frontmoduls an einem an einer Wand befestigbaren Trägermodul.

### Hintergrund der Erfindung

An Wänden eines Gebäudes werden Funktionssysteme, wie beispielsweise Steckdosen, Lichtschalter oder Thermostate, direkt befestigt. Die Systeme bestehen dabei im Allgemeinen aus einem Frontmodul und einem Trägermodul. Das Trägermodul ist üblicherweise an der Wand befestigt. Das Frontmodul kann beispielsweise mittels einer Haltefeder auf einer Montageplatte des Trägermoduls befestigt werden. Aufgrund der Haltefedern kann das Frontmodul ohne zusätzliche Werkzeuge installiert werden. Auch das Entfernen des Frontmoduls ist ohne Werkzeug möglich. Dies ermöglicht zwar ein schnelles Entfernen des Frontmoduls, führt aber oftmals dazu, dass Benutzer das Frontmodul unerlaubt entfernen. Mit anderen Worten können herkömmliche Frontmodule schnell entfernt und somit schnell und unauffällig gestohlen werden. Überdies hinaus kann eine unerlaubte Entfernung des Frontmoduls durch nicht autorisierte Personen auch zu einer Systemunsicherheit und zu einem Systemausfall führen.

Die französische Patentanmeldung FR2908562 nimmt die Priorität einer spanischen Anmeldung vom 14. November 2006 in Anspruch und offenbart ein ein als Diebstahlsicherung identifiziertes Blockiermittel (14), eine als Frontmodul dienende externe Platte (4) und ein als Trägermodul identifziertes Gehäuse (1). Die Diebstahlsicherung (14) aus FR2908562 eignet sich dazu, das Frontmodul (4) und das Trägermodul (1) zu verbinden. Die Diebstahlsicherung (14) nach FR2908562 ist als Schraube ausgebildet und über eine zugangsöffnung (17) anhand eines geeigneten Werkzeuges vom Frontmoduls aus erreichbar.

### Darstellung der Erfindung

Es ist eine Aufgabe der vorliegenden Erfindung, ein an der Wand befestigbares System vor Diebstahl zu sichern.

Diese Aufgabe wird durch eine Anordnung gemäß Anspruch 1 und ein System gemäß Anspruch 7 gelöst.

Unter dem Begriff "Wand" wird eine räumliche Begrenzung eines Raumes eines Gebäudes verstanden, insbesondere ein Boden, eine Decke oder eine Seitenwand eines Raumes.

Unter dem Begriff "Trägermodul" wird ein an der Wand befestigbares Modul bezeichnet. Das Trägermodul kann beispielsweise mittels einer Schraubverbindung oder mittels einer Klemmvorrichtung an die (Oberfläche der) Wand oder in einem Hohlraum innerhalb der Wand befestigbar sein. Ferner ist das Trägermodul eingerichtet, das Funktionsmodul zu befestigen. Das Trägermodul kann aus einem Metallrahmen oder aus einer Kunststoffanordnung bestehen.

Das Frontmodul ist ausgebildet, beispielsweise mittels einer Schraubverbindung und/oder mittels einer Klemmverbindung an dem Trägermodul befestigt zu sein und somit an der Wand befestigt zu sein. Das Frontmodul kann beispielsweise eine speziell geformte Oberfläche aufweisen, in welcher beispielsweise genormte bzw. vorbestimmte Bauteile, wie beispielsweise ein männlicher (Strom- und/oder Daten-) Stecker (zum Beispiel gemäß DIN-Vorschrift), geführt und gehaltert werden. Mit anderen Worten kann das Frontmodul beispielsweise einen Teil einer Wandsteckdose ausbilden. Ferner kann eine Funktionseinrichtung des Frontmoduls mit einem Bedienelement und/oder einem Anzeigeelement ausgebildet sein. Die Funktionseinrichtung des Frontmoduls kann beispielsweise ein Thermostat oder eine sonstige Eingabe- und Anzeigeeinrichtung für bestimmte Raumtechniken (z.B. Steuerung für Raumbelüftung, Heizkörper etc.) bezeichnen.

Der Begriff "Diebstahlsicherungsvorrichtung" bezeichnet eine Vorrichtung, welche einerseits an dem Frontmodul und andererseits an dem Trägermodul fixiert ist, um somit ein diebstahlsicheres Fixieren des Frontmoduls an dem Trägermodul bereitzustellen. Gleichwohl kann die Diebstahlsicherungsvorrichtung eine kleinere relative Bewegung zwischen dem Frontmodul und dem Trägermodul zulassen, ohne jedoch ein völliges Entfernen des Frontmoduls von dem Trägermodul zu erlauben. Die Diebstahlsicherungsvorrichtung ist insbesondere derart mit dem Frontmodul und/oder dem Trägermodul fixiert, dass ausschließlich ein Spezialwerkzeug die entsprechende Fixierung lösen kann. Mit anderen Worten ist die Diebstahlsicherungsvorrichtung derart eingerichtet, dass ein händisches bzw. manuelles Entfernen ohne ein Spezialwerkzeug des Frontmoduls von dem Trägermodul unmöglich ist bzw. verhindert wird.

Unter dem Begriff "Spezialwerkzeug" wird ein speziell ausgebildetes einzigartiges Werkzeug bezeichnet, mit welchem ausschließlich die Fixierung der Diebstahlsicherungsvorrichtung von dem Frontmodul und/oder dem Trägermodul gelöst werden kann. Das Spezialwerkzeug kann derart an eine bestimmte Ausführung der Diebstahlsicherungsvorrichtung und/oder an eine Zugangsöffnung in dem Frontmodul und/oder dem Trägermodul durch sein Profil angepasst sein, dass ausschließlich ein entsprechendes und zur Lösung der Diebstahlsicherungsvorrichtung vorgesehenes Spezialwerkzeugs verwendbar ist. Mit anderen Worten kann mit anderen, nicht für die Lösung der Diebstahlsicherungsvorrichtung vorgesehenen Werkzeugen die Diebstahlsicherungsvorrichtung nicht gelöst werden.

Die Ausschließlichkeit, wonach nur ein speziell gefertigtes und angepasstes Spezialwerkzeug eine entsprechende Diebstahlsicherungsvorrichtung lösen kann, kann beispielsweise aufgrund einer speziellen Ausformung bzw. Ausbildung der Diebstahlsicherungsvorrichtung und/oder durch eine bestimmte Ausformung und Ausbildung eines Zugangskanals bzw. einer Zuführöffnung zu der Diebstahlsicherungsvorrichtung umgesetzt werden.

Erfindungsgemäß weist die Diebstahlsicherungsvorrichtung einen ersten Endabschnitt und einen zweiten Endabschnitt auf. Der erste Endabschnitt ist derart ausgeformt, dass mit einem ersten Befestigungsbereich des Frontmoduls eine erste Fixierung herstellbar ist. Ferner ist der zweite Endabschnitt derart ausgeformt, dass mit einem zweiten Befestigungsbereich des Trägermoduls eine zweite Fixierung herstellbar ist. Der erste Endabschnitt und/oder der zweite Endabschnitt sind derart ausgebildet, dass die erste Fixierung und/oder die zweite Fixierung ausschließlich mittels des Spezialwerkzeugs lösbar ist.

Die Diebstahlsicherungsvorrichtung kann beispielsweise aus einem linearförmig ausgeformten Körper (z.B. einem Stab oder Pin) oder mit z.B. einem U-förmigen Querschnitt bzw. Profil ausgebildet sein. An den jeweiligen Enden der Diebstahlsicherungsvorrichtung kann einerseits das Frontmodul und andererseits das Trägermodul befestigt werden. Hierbei kann eines der Endabschnitte mittels des Spezialwerkzeugs lösbar sein oder beide Endabschnitte mittels des Spezialwerkzeugs lösbar sein. Ohne das benötigte Spezialwerkzeug kann die erste Fixierung und/oder die zweite Fixierung nicht gelöst werden, so dass ein nicht autorisierter Benutzer ohne das Spezialwerkzeug nicht das Frontmodul von dem Trägermodul entfernen kann, zumindest ohne eine Zerstörung eines der Module und Einrichtungen in Kauf zu nehmen.

Gemäß der Erfindung weist der erste Endabschnitt ein erstes Schnappelement auf. Das erste Schnappelement ist derart ausgebildet, dass dieses in dem ersten Befestigungsbereich des Frontmoduls einschnappbar ist. Das erste Schnappelement kann beispielsweise ein keilförmiges Element oder ein hakenförmiges Element darstellen. Der erste Befestigungsbereich des Frontmoduls kann beispielsweise eine Öffnung aufweisen, in welcher Öffnung ein Absatz oder eine Hinterschneidung ausgeformt ist. Bei Einschieben des ersten Endabschnitts in die Öffnung drückt der Absatz gegen das Schnappelement, sodass sich dieses elastisch verformt. Wenn das Schnappelement den Absatz in der Öffnung des ersten Befestigungsbereichs passiert hat, kann sich das Schnappelement zurück in seine Ausgangsposition zurückbiegen und mit dem Absatz bzw. der Hinterschneidung in der Öffnung eine Verkeilung bewirken. Aufgrund dieser Verkeilung ist ein Herausziehen des Schnappelements entgegen der Einschubrichtung aus der Öffnung verhindert.

Mittels des Spezialwerkzeugs kann beispielsweise das Schnappelement elastisch (oder bei einer Einmalanwendung auch plastisch) verformt werden, so dass die Verkeilung des Schnappelements mit dem Absatz innerhalb der Öffnung des ersten Befestigungsbereichs gelöst wird und ein erneutes Herausziehen des ersten Endabschnitts aus dem ersten Befestigungsbereich durch den Benutzer ermöglicht wird. Somit kann die erste Fixierung beispielhaft gelöst werden.

In einer beispielhaften Ausführungsform kann der zweite Endabschnitt ein zweites Schnappelement aufweisen. Das zweite Schnappelement ist derart ausgebildet, dass dieses in dem zweiten Befestigungsbereich des Trägermoduls einschnappbar ist. Das zweite Schnappelement sowie der zweite Befestigungsbereich können entsprechend dem oben beschriebenen ersten Schnappelement und dem oben beschriebenen ersten Befestigungsbereich ausgebildet werden.

Gemäß einer weiteren beispielhaften Ausführungsform ist der zweite Endabschnitt derart ausgebildet, dass dieser in den zweiten Befestigungsbereich des Trägermoduls einschraubbar ist. Somit wird mit anderen Worten eine Schraubverbindung zwischen dem zweiten Endabschnitt und dem zweiten Befestigungsbereich ermöglicht. Der zweite Endabschnitt kann beispielsweise ein Außengewinde aufweisen, welches in eine zugehörige Bohrung mit Innengewinde des zweiten Befestigungsbereichs eingeschraubt wird. Alternativ kann der zweite Endabschnitt eine hohlzylindrische Form mit einem Innengewinde aufweisen und der zweite Befestigungsbereich ein stabförmiges Element mit einem Außengewinde aufweisen, wobei der Hohlzylinder des zweiten Endabschnitts auf dem Stab des zweiten Befestigungsbereich aufgeschraubt werden kann.

Eine beispielhafte Ausführungsform, welche beispielsweise als erste Fixierung eine Schnappverbindung und als zweite Fixierung eine Schraubverbindung, wie oben erläutert, aufweist, stellt eine robuste Fixierung dar. Beispielsweise verhindert die Schnappverbindung ein Verdrehen bzw. ein Schrauben der Diebstahlsicherungsvorrichtung, so dass ein Lösen der zweiten Fixierung mittels der Schnappverbindung verhindert wird. So muss beispielsweise ein Benutzer zunächst die erste Fixierung bzw. die Schnappverbindung zwischen dem Frontmodul und der Diebstahlsicherungsvorrichtung mittels des Spezialwerkzeugs lösen. Anschließend, beispielsweise nach Entfernen des Frontmoduls, kann der Benutzer die Schraubverbindung bzw. die zweite Fixierung lösen und die Diebstahlsicherungsvorrichtung gänzlich entfernen.

Gemäß einer weiteren beispielhaften Ausführungsform kann die zweite Fixierung ebenfalls mittels einer Löt-, Schweiß- oder Klebeverbindung bereitgestellt werden.

Gemäß der Erfindung weist das Frontmodul eine Zugangsöffnung auf. Das Frontmodul umgibt die Diebstahlsicherungsvorrichtung derart, dass die Diebstahlsicherungsvorrichtung von dem Spezialwerkzeug zur Lösung der Diebstahlsicherungsvorrichtung ausschließlich durch die Zugangsöffnung erreichbar ist. Ebenfalls kann die Zugangsöffnung derart ausgebildet sein, dass ausschließlich ein zugehöriges Spezialwerkzeug durch die Zugangsöffnung einbringbar ist. Eine beispielhafte Ausführungsform hierzu wird weiter unten erläutert.

In der beispielhaften Ausführungsform umhüllt das Frontmodul die Diebstahlsicherungsvorrichtung. Die Diebstahlsicherungsvorrichtung ist somit in dem Frontmodul eingehaust. Die Zugangsöffnung in dem Frontmodul ist derart ausgebildet, dass beispielsweise ein Benutzer nicht mit seinen Fingern in die Zugangsöffnung eindringen und die Diebstahlsicherungsvorrichtung erreichen kann. Beispielsweise hat die Zugangsöffnung eine größte innere Abmessung (z.B. Durchmesser, Breite, Länge), welche kleiner als 1 cm, insbesondere kleiner als 0, 5 cm, ist. Somit wird verhindert, dass ein nicht autorisierter Benutzer ohne zusätzliches Spezialwerkzeug die erste Fixierung zwischen der Diebstahlsicherungsvorrichtung und dem Frontmodul löst. Selbst wenn der nicht autorisierte Benutzer ein Spezialwerkzeug zur Hand hätte, würde die zeitliche Dauer des Entfernens des Frontmoduls von dem Trägermodul erhöht werden, so dass dies ebenfalls einen Diebstahl des Frontmoduls erschweren würde.

Gemäß einer weiteren beispielhaften Ausführungsform formt die Zugangsöffnung eine Querschnittsform aus, welche an eine Profilform des (zugehörigen) Spezialwerkzeugs derart angepasst ist, so dass ausschließlich mittels des Spezialwerkzeugs die Diebstahlsicherungsvorrichtung durch die Zugangsöffnung erreichbar ist.

Die Zugangsöffnung kann beispielsweise als Querschnittsform, beispielsweise eine Kreisform, eine Dreiecksform, eine elliptische Form, eine rechteckige Form oder auch eine unsymmetrisch wellige und/oder eckige Querschnittsform aufweisen. Mit anderen Worten kann die Querschnittsform eine Mischung an runden, geraden und eckigen Bereichen aufweisen.

Die Profilform des Spezialwerkzeugs beschreibt eine Umfangsform des Spezialwerkzeugs. Die Profilform ist mit ihrem Umfang an die Querschnittsform der Zugangsöffnung angepasst. Besteht die Querschnittsform beispielsweise aus einem Dreieck, so stellt die Profilform des Spezialwerkzeugs ebenfalls ein entsprechendes Dreieck dar. Die Profilform ist auch mit ihren Dimensionen an die Dimension der Querschnittsform angepasst. Somit kann beispielsweise im obigen Beispiel ausschließlich ein Spezialwerkzeug mit einer Dreiecksform in die Zugangsöffnung eingeführt werden. Die Zugangsöffnung kann ebenfalls eine Tiefe aufweisen, wobei in ihrer Tiefe die Querschnittsform stetig und homogen verläuft. In einer anderen beispielhaften Ausführungsform kann die Zugangsöffnung entlang ihrer Tiefe ebenfalls einen unsymmetrischen und unstetigen Verlauf aufweisen. An diesen unsymmetrischen Verlauf kann ebenfalls die Profilform des Spezialwerkzeugs angepasst werden. In dieser beispielhaften Ausführungsform kann beispielsweise ein Schlüssel-Schloss-Prinzip umgesetzt werden, wobei das Spezialwerkzeug als Schlüssel in die Zugangsöffnung als Schloss einführbar ist. Mit anderen Worten weist die Zugangsöffnung somit eine definierte dreidimensionale (Innen-) Oberflächenform auf, wobei die Außenoberfläche (Profilform) des Spezialwerkzeugs an den dreidimensionalen Oberflächenverlauf der Oberfläche der Zugangsöffnung angepasst ist.

Mit dieser beispielhaften Ausführungsform wird eine sichere Diebstahlsicherung geschaffen, da ausschließlich mit dem einzigartigen Spezialwerkzeug ein Eindringen in die Zugangsöffnung und somit ein Erreichen der Diebstahlsicherungsvorrichtung ermöglicht wird. Dies erschwert die Fälschung eines Spezialwerkzeugs durch einen nicht autorisierten Benutzer. Ferner ist somit sichergestellt, dass ein Benutzer ausschließlich mittels des einzigartigen Spezialwerkzeugs die erste Fixierung zwischen der Diebstahlsicherungsvorrichtung und dem Frontmodul lösen kann.

Gemäß einer weiteren beispielhaften Ausführungsform weist das Frontmodul eine Schmalseite auf, in welcher die Zugangsöffnung ausgeformt ist.

Die Schmalseite des Frontmoduls ist beispielsweise die Seitenfläche, welche mit ihrer Fläche kleiner ist als die Fläche einer Stirnfläche des Frontmoduls. Die Stirnfläche kann in einer Ebene verlaufen, deren Normale parallel mit einer Normalen einer Wandebene ist, in welcher die Wand verläuft, wenn das Frontmodul an dem in der Wand befestigten Trägermodul befestigt ist. Anders ausgedrückt ist die Schmalseite diejenige Seite, welche zwischen der Wandoberfläche und der Stirnfläche des Frontmoduls ausgebildet ist. Die Schmalseite verläuft im Wesentlichen rechtwinklig zu der Stirnfläche des Frontmoduls.

Somit kann die gesamte Stirnfläche des Frontmoduls genutzt werden, um beispielsweise funktionale Einrichtungen, wie beispielsweise ein Bedienfeld oder eine Anzeigevorrichtung, einzurichten. Die Stirnfläche wird somit nicht mit der Funktion der Diebstahlsicherungsvorrichtung belegt. Somit wird durch die Zugangsöffnung das optische Erscheinungsbild durch einen Blick auf die Stirnfläche nicht gestört. Zusätzlich führt die Ausformung der Zugangsöffnung auf der Schmalseite zu weniger Verschmutzung, und beispielsweise Verstopfung der Zugangsöffnung, da die Schmalseite frei von Bedienelementen ausgebildet sein kann.

Gemäß einer weiteren beispielhaften Ausführungsform weist das Frontmodul eine Aufnahmeöffnung zur Aufnahme der Diebstahlsicherungsvorrichtung auf. Der erste Befestigungsbereich weist insbesondere die Aufnahmeöffnung auf, um die erste Fixierung herzustellen. Die Aufnahmeöffnung ist derart ausgebildet, dass die Diebstahlsicherungsvorrichtung entlang einer ersten Richtung in die Aufnahmeöffnung einschiebbar ist. Die Zugangsöffnung ist derart ausgebildet, dass das Spezialwerkzeug entlang einer zweiten Richtung in die Zugangsöffnung einschiebbar ist. Die Aufnahmeöffnung und die Zugangsöffnung sind derart ausgebildet, dass sich die erste Richtung von der zweiten Richtung unterscheidet.

Gemäß einer weiteren beispielhaften Ausführungsform des Systems ist das Trägermodul zur Befestigung an der Wand derart ausgebildet, dass mittels des Trägermoduls ein Hohlraum in der Wand abdeckbar ist.

Das Trägermodul kann beispielsweise eine Unterputz (UP)-Dose aufweisen. Ferner kann das Trägermodul eine Montageplatte aufweisen, welche einen größeren Durchmesser als der Hohlraum aufweist, so dass wandüberdeckende Bereiche entstehen. In diesen wandüberdeckenden Bereichen der Montageplatte können Befestigungsmittel, wie beispielsweise Schrauben, durch die Montageplatte in die Wand eingebracht werden, so dass eine Fixierung der Montageplatte und somit des Trägermoduls in den Hohlraum der Wand bereitgestellt wird.

Gemäß einer weiteren beispielhaften Ausführungsform weist das Frontmodul eine Funktionseinrichtung auf. Das Trägermodul weist ein Anschlusselement auf. Die Funktionseinrichtung ist an dem Anschlusselement zur Signalübertragung anschließbar.

Die Funktionseinrichtung kann beispielsweise ein Thermostat, eine Halterung für einen Stecker (Steckdose), ein Anzeigeelement (zum Beispiel digitale Anzeige der Temperatur etc.), oder andere Bedienelemente für eine Gebäudetechnik darstellen.

Das Frontmodul kann ferner einen Rahmen bzw. eine Blende aufweisen, welche den Rand der Funktionseinrichtung umgibt. Der Rahmen kann die Funktionseinrichtung haltern. Die Befestigung mit dem Trägermodul kann über den Rahmen bereitgestellt werden. Zudem kann in dem Rahmen der erste Befestigungsbereich zur Fixierung der Diebstahlsicherungsvorrichtung ausgebildet sein. Alternativ kann der erste Befestigungsbereich auch in der Funktionseinrichtung ausgebildet sein.

Das Anschlusselement weist beispielsweise elektrisch leitende Elemente auf. An einem Bereich des Anschlusselements können beispielsweise signalübertragende Elemente (wie beispielsweise eine Leitung) angeschlossen werden. An einem anderen Bereich des Anschlusselements kann ein Kontaktbereich mit der Funktionseinrichtung ausgebildet werden, so dass die Signale zwischen dem Signalübertragungselement und der Funktionseinrichtung übertragbar sind.

Gemäß einer weiteren beispielhaften Ausführungsform ist das Anschlusselement derart eingerichtet, dass eine Leitung, welche zwischen der Wand und dem Anschlusselement (beispielsweise innerhalb des Hohlraums) verläuft, zur Signalübertragung an dem Anschlusselement anschließbar ist. Das Anschlusselement ist derart eingerichtet, dass die Funktionseinrichtung von außerhalb der Wand an das Anschlusselement anschließbar ist. Dadurch kann der Benutzer von außen die Funktionseinrichtung bedienen und entsprechende Signale an die Leitung übertragen. Ferner können beispielsweise zum Betreiben einer Anzeigevorrichtung, Anzeigesignale von der Leitung an die Funktionseinrichtung übertragen werden.

Unter einem Signal werden beispielsweise analoge oder digitale Signale verstanden. Zudem kann die Signalübertragung auch eine Stromversorgung zwischen Funktionseinrichtung und Leitung beschreiben. Beispielsweise kann damit die Funktionseinrichtung ein Schalterelement oder eine Aufnahmevorrichtung für einen Stromstecker darstellen.

Mit der oben beschriebenen Erfindung wird eine Diebstahlsicherungsvorrichtung beschrieben, welche an dem Trägermodul angebracht werden kann und bei Installation des Frontmoduls in einen ersten Befestigungsbereich des Frontmoduls einrastet. Somit werden beide Module, das Trägermodul und das Frontmodul, fixiert. Ferner können weitere Befestigungselemente zwischen dem Frontmodul und dem Trägermodul eingesetzt werden.

Bei Ausbildung einer Schnappverbindung zwischen dem Frontmodul und der Diebstahlsicherungsvorrichtung wird ermöglicht, dass bei Anbringung des Frontmoduls an die Diebstahlsicherungsvorrichtung kein Spezialwerkzeug notwendig ist. Erst beim Entfernen des Frontmoduls von der Diebstahlsicherungsvorrichtung ist das Spezialwerkzeug notwendig. Somit verzögert die Diebstahlsicherungsvorrichtung nicht die Montage des Frontmoduls, erhöht allerdings die Diebstahlsicherungsvorrichtung. Ferner kann dem Kunden bzw. dem Benutzer freigestellt werden, ob er die Diebstahlsicherungsvorrichtung benutzen möchte oder nicht, da zwischen dem Trägermodul und dem Frontmodul zusätzliche Befestigungselemente und Befestigungsverbindungen, wie beispielsweise weitere Schraubverbindungen oder weitere Schnappverbindungen, bereitgestellt werden können. Bei Anbringung der oben beschriebenen Zugangsöffnung beispielsweise in der Schmalseite des Frontmoduls, wird durch die Diebstahlsicherungsvorrichtung und die Zugangsöffnung im Frontmodul das Erscheinungsbild des Systems durch die zusätzliche Diebstahlsicherungsvorrichtung nicht beeinflusst oder verändert.

Die Diebstahlsicherungsvorrichtung kann ebenfalls eine gewünschte bzw. beliebige Länge aufweisen, so dass beispielsweise installationsabhängige Unterschiede der Lage zwischen dem Frontmodul und dem Trägermodul von beispielsweise mehr als 4 mm überbrückt werden können.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben.
Fig. 1 zeigt eine schematische Darstellung der zum System zugehörigen Module und Bauteile in einem nicht verbundenen Zustand, gemäß einer beispielhaften Ausführungsform der vorliegenden Erfindung;
Fig. 2 zeigt die zur Erfindung zugehörigen Module und Bauteile in einem miteinander befestigten Zustand, gemäß einer beispielhaften Ausführungsform der Erfindung;
Fig. 3 bis Fig. 5 zeigen schematische Darstellungen verschiedener Ansichten einer Diebstahlsicherungsvorrichtung gemäß einer beispielhaften Ausführungsform der vorliegenden Erfindung; und
Fig. 6 zeigt ein System gemäß einer beispielhaften Ausführungsform der vorliegenden Erfindung; und
Fig. 7 zeigt ein System gemäß einer beispielhaften Ausführungsform der vorliegenden Erfindung, wobei das Frontmodul mit der Diebstahlsicherungsvorrichtung verhakt ist.

### Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

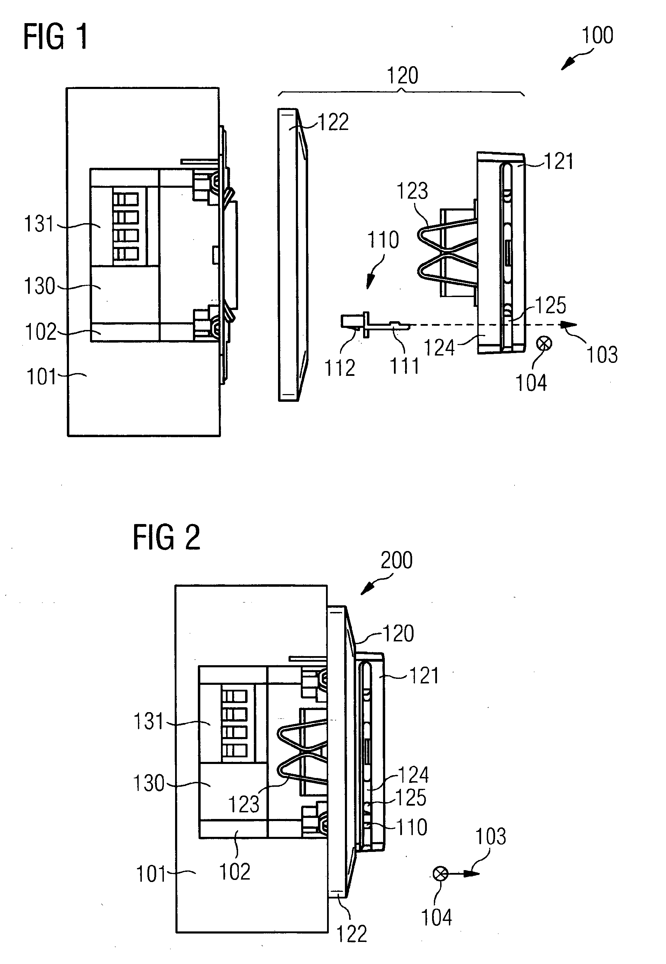

**Fig. 1** zeigt eine Anordnung 100 mit einem Frontmodul 120 zum Anbringen an einem an einer Wand 101 befestigbaren Trägermodul 130 und eine Einrichtung zur diebstahlsicheren Fixierung des Frontmoduls 120 an dem Trägermodul 130. Die Einrichtung weist eine Diebstahlsicherungsvorrichtung 110 auf. Die Diebstahlsicherungsvorrichtung 110 ist derart ausgebildet, dass mittels dieser das Frontmodul 120 und das Trägermodul 130 miteinander fixierbar sind. Die Diebstahlsicherungsvorrichtung 110 ist von dem Frontmodul 120 und/oder dem Trägermodul 130 ausschließlich mittels eines Spezialwerkzeugs lösbar.

Die Diebstahlsicherungsvorrichtung 110 weist einen ersten Endabschnitt 111 und einen zweiten Endabschnitt 112 auf. Zur Bildung einer ersten Fixierung ist die Diebstahlsicherungsvorrichtung 110 mit ihrem ersten Endbereich 111 mit einem ersten Befestigungsbereich des Frontmoduls 120 befestigbar.

In der beispielhaften Ausführungsform in Fig. 1 besteht das Frontmodul 120 aus einer Funktionseinrichtung 121 und einem Rahmen 122. Die Funktionseinrichtung 121 kann beispielsweise einen Schalter, ein Thermostat, eine Anzeige oder Ähnliches darstellen. Der Rahmen 122 umgibt die Funktionseinrichtung 121 und ist zwischen der Wand 101 und der Funktionseinrichtung 121 befestigt. Der erste Befestigungsbereich kann in anderen beispielhaften Ausführungsformen zur Bildung der ersten Fixierung auch in dem Rahmen 122 ausgebildet werden.

Das Frontmodul 120 kann Befestigungselemente 123 aufweisen, welche in der beispielhaften Ausführungsform in Fig. 1 an der Funktionseinrichtung 121 angeordnet sind. Das Befestigungselement 123 kann beispielsweise Spreizklammern aufweisen, wie in Fig. 1 dargestellt. Alternativ sind auch Schraubverbindungen oder andere Befestigungselemente 123 einsetzbar. Die Spreizklammern 123 können sich beispielsweise mit dem Trägermodul 130 verklemmen, so dass eine Befestigung zwischen der Funktionseinrichtung 121 und somit zwischen dem Frontmodul 120 und dem Trägermodul 130 bereitstellbar ist.

Das Trägermodul 130 ist beispielsweise in einem Hohlraum 102 der Wand 101 angeordnet. Beispielsweise kann das Trägermodul 130 eine Montageplatte aufweisen, mit welcher das Trägermodul 130 an der Wand 101 befestigbar ist. Ferner weist das Trägermodul 130 ein Anschlusselement 131 auf. Das Anschlusselement 131 kann beispielsweise an eine Leitung, welche innerhalb der Wand verläuft, zur Signalübertragung angeschlossen sein. Andererseits kann das Anschlusselement ebenfalls ein Sender- und/oder ein Empfängermodul aufweisen, um Signale, welche von der Funktionseinrichtung 121 erhalten werden, an eine entfernte Basisstation drahtlos zu übertragen. Das Sender- und/oder ein Empfängermodul kann auch in der Funktionseinrichtung 121 angeordnet sein. Das Anschlusselement 131 ist ferner ausgebildet, um mit einer entsprechenden Anschlussvorrichtung der Funktionseinrichtung 121 zur Signalübertragung verbunden zu werden.

Wie in Fig. 1 dargestellt, weist das Frontmodul 120 bzw. die Funktionseinrichtung 121 eine Schmalseite 124 auf. Die Schmalseite 124 ist die Seitenfläche der Funktionseinrichtung 121, wobei die Schmalseite 124 eine Ebene mit einer Normalen aufweist, welche parallel zu der Wandoberfläche 101 verläuft bzw. welche rechtwinklig zu einer Normalen einer Wandebene, in welcher die Wandoberfläche der Wand 101 verläuft, ausgerichtet ist.

In der Schmalseite 124 ist eine Zugangsöffnung 125 ausgebildet. Durch die Zugangsöffnung 125 kann ein Spezialwerkzeug eingeführt werden, um die erste Fixierung zwischen dem ersten Endbereich 111 der Diebstahlsicherungsvorrichtung 110 und dem ersten Befestigungsbereich des Frontmoduls 120 bzw. der Funktionseinrichtung 121 von einander zu lösen.

Wie in Fig. 1 dargestellt, ist die Diebstahlsicherungsvorrichtung 110 entlang einer ersten Richtung 103 in den Befestigungsbereich der Funktionseinrichtung 121 einschiebbar. Die erste Richtung 103 ist beispielsweise parallel zu der Normale der Wandebene, entlang welcher die Wandoberfläche der Wand 101 verläuft, ausgebildet.

Die Zugangsöffnung 125 ist derart ausgebildet, dass ein Spezialwerkzeug, welches durch die Zugangsöffnung 125 zur Lösung der ersten Fixierung einschiebbar ist, entlang einer zweiten Richtung 104 eingeführt werden kann. Die zweite Richtung 104 unterscheidet sich von der ersten Richtung 103. In der beispielhaften Ausführungsform in Fig. 1 verläuft die erste Richtung 103 zur zweiten Richtung 104 rechtwinklig zueinander.

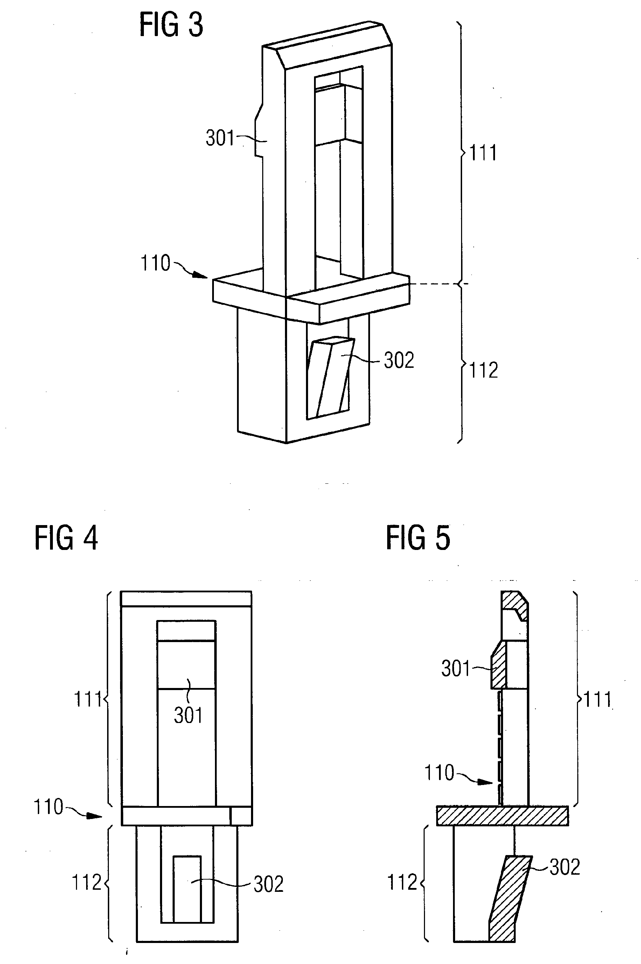

In der beispielhaften Ausführungsform in Fig. 1 weist die Diebstahlsicherungsvorrichtung 110 an ihrem ersten Endabschnitt 111 ein erstes Schnappelement 301 auf (siehe Fig. 3), welches mit dem ersten Befestigungsbereich der Funktionseinrichtung 121 eine Schnapp- bzw. Einrastfixierung erzeugt. Das Spezialwerkzeug wird zur Lösung der ersten Fixierung in die erste Zugangsöffnung 125 eingeführt. Das Spezialwerkzeug verformt den ersten Endabschnitt 121 und löst damit die Einrastverbindung zwischen dem ersten Endabschnitt 111 und der Funktionseinrichtung 121. Erst nach Lösung der ersten Fixierung kann die Funktionseinrichtung 121 samt Rahmen 122 von dem Trägermodul 130 entfernt werden.

Der zweite Endbereich 112 der Diebstahlsicherungsvorrichtung 110 ist an einen zweiten Befestigungsbereich des Trägermoduls 130 befestigbar. Die zweite Fixierung zwischen dem zweiten Endbereich 112 und dem zweiten Befestigungsbereich des Trägermoduls 130 kann ebenfalls über eine Schnapp- bzw. Einrastverbindung umgesetzt werden. Ferner kann ebenfalls eine Schraubverbindung zwischen dem zweiten Endbereich 112 und dem Befestigungsbereich des Trägermoduls 130 umgesetzt werden. Die zweite Fixierung kann z.B. erst dann gelöst werden, wenn das Frontmodul 120 abgenommen ist, da das Frontmodul 120 die Diebstahlsicherungsvorrichtung 110 und die Befestigungsbereiche umhüllt bzw. einhaust.

**Fig. 2** zeigt eine beispielhafte Ausführungsform, in welcher das Frontmodul 120 an dem Trägermodul 130, welches in der Wand 101 befestigt ist, fixiert ist. Die Anordnung 100, bestehend aus der Diebstahlsicherungsvorrichtung 110 und dem Frontmodul 120, bilden mit dem Trägermodul 130 ein System 200. Die Ausführungsform in Fig. 2 weist dieselben Merkmale wie die Ausführungsform in Fig. 1 auf. In Fig. 2 ist deutlicher sichtbar, dass durch die Zugangsöffnung 125 in der Schmalseite 124 ein Bereich der Diebstahlsicherungsvorrichtung 110, insbesondere der erste Endabschnitt 111, mittels des Spezialwerkzeugs erreichbar ist. Das Spezialwerkzeug kann in die Zugangsöffnung 125 entlang der zweiten Richtung 104, welche in die Zeichenebene in Fig. 2 hinein verläuft, eingeschoben werden, um die erste Fixierung lösen. Anschließend oder gleichzeitig muss der Benutzer das Frontmodul 120 aufweisend die Funktionseinrichtung 121 und den Rahmen 122 von dem Trägermodul 130 lösen. Ein Entfernen des Frontmoduls 120 ohne Spezialwerkzeug ist nicht möglich. Die Zugangsöffnung 125 weist derart kleine Dimensionen (z.B. einen Durchmesser von weniger als 1 cm) auf, dass ein manuelles bzw. händisches Erreichen der Diebstahlsicherungsvorrichtung 110 unmöglich ist.

**Fig. 3 bis Fig. 5** zeigen eine detailliertere Darstellung einer beispielhaften Ausführungsform der Diebstahlsicherungsvorrichtung 110. Fig. 3 zeigt dabei eine perspektivische Darstellung der Diebstahlsicherungsvorrichtung 110, Fig. 4 zeigt eine Frontansicht der Diebstahlsicherungsvorrichtung 110 und Fig. 5 zeigt eine seitliche Schnittdarstellung der Diebstahlsicherungsvorrichtung 110.

Die Diebstahlsicherungsvorrichtung 110 weist den ersten Endbereich 111 und den zweiten Endbereich 112 auf. In dem ersten Endbereich 111 ist zur Ausbildung einer Schnappverbindung, insbesondere der ersten Fixierung, ein erstes Schnappelement 301 ausgebildet. Zur Bildung einer zweiten Schnappverbindung bzw. der zweiten Fixierung weist der zweite Endabschnitt 112 ein zweites Schnappelement 302 auf. Das zweite Schnappelement 302 kann beispielsweise mit einem zweiten Befestigungsbereich des Trägermoduls 130 eine Schnappverbindung ausbilden.

Das erste Schnappelement 301 und das zweite Schnappelement 302 bilden jeweils einen Schnapphaken bzw. einen Einschnappkeil aus. Die Diebstahlsicherungsvorrichtung 110 kann beispielsweise mit ihrem ersten Endereich 111 in eine Ausnehmung des ersten Befestigungsbereichs des Frontmoduls 120 eingeführt werden.

Der zweite Bereich 112 kann mit seinem zweiten Schnappelement 302 eine entsprechende Schnappverbindung mit dem Trägermodul 130 ausbilden. Der zweite Befestigungsbereich des Trägermoduls 130 und der zweite Endabschnitt 112 mit dem zugehörigen zweiten Schnappelement 302 können entsprechend dem ersten Befestigungsbereich des Frontmoduls 120 und dem ersten Endabschnitt 111 mit dem ersten Schnappelement 301 ausgebildet werden.

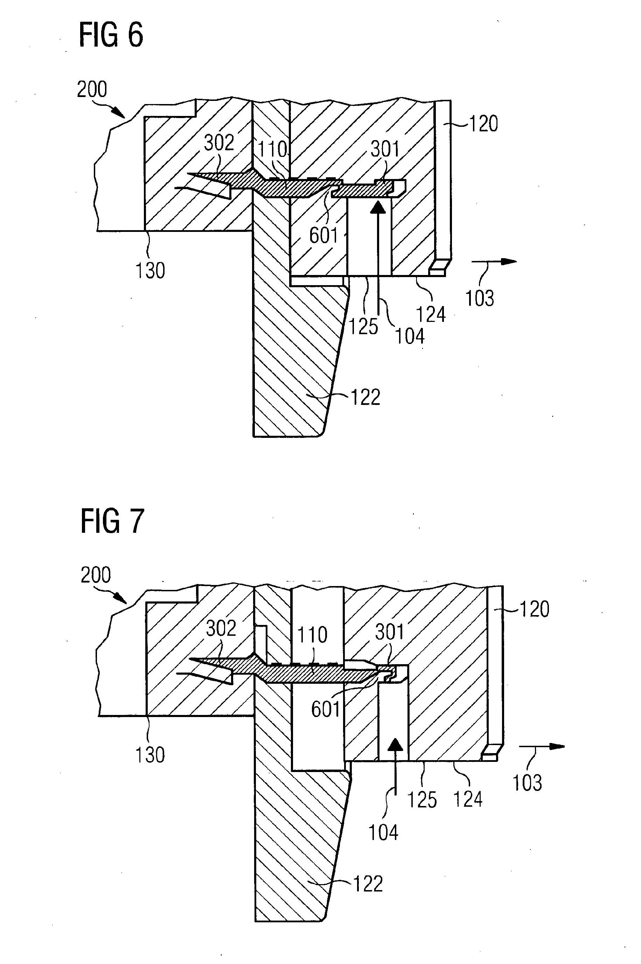

**Fig. 6** und **Fig. 7** zeigen ein System 200, in welchem die Diebstahlsicherungsvorrichtung 110, welche das Schnappelement 301 aufweist, mit dem Frontmodul 120 fixiert ist. Die Aufnahmeöffnung des ersten Befestigungsbereichs des Frontmoduls 120 kann beispielsweise einen (z.B. innenliegenden) Absatz/Widerhaken 601 ausbilden. Während des Einschiebens der Diebstahlsicherungsvorrichtung 110 entlang der ersten Richtung 103 in die Aufnahmeöffnung verformt sich der erste Endbereich 111 der Diebstahlsicherungsvorrichtung 110 elastisch, da während des Einschiebens der Absatz 601 in der Aufnahmeöffnung das erste Schnappelement 301 und somit den ersten Endabschnitt 111 (z.B. elastisch) verformt. Nachdem das erste Schnappelement 301 über den Absatz 601 in der Aufnahmeöffnung geschoben wurde, federt der erste Endabschnitt 111 zurück in seine Ausgangsposition, so dass das erste Schnappelement 301 sich mit dem Absatz 601 in der Aufnahmeöffnung verkeilt. Fig. 6 zeigt eine Diebstahlsicherungsvorrichtung 110, welche in der Aufnahmeöffnung eingeschoben ist.

Fig. 7 zeigt eine relative Position zwischen dem Frontmodul 120 und dem Trägermodul 130, in welcher Position das Schnappelement 301 mit dem Absatz 601 verkeilt ist. Diese Position entsteht, wenn das Frontmodul 120 von dem Trägermodul 130 entfernt wird, ohne dass das Schnappelement 301 mittels des Spezialwerkzeugs von dem Absatz 601 weggebogen wird. Ein weiteres Entfernen des Frontmoduls 120 von dem Trägermodul 130 entlang der ersten Richtung 103 ist somit verhindert. Zur Lösung der ersten Fixierung wird ein Spezialwerkzeug benötigt, welches den ersten Endabschnitt 111 erneut elastisch oder plastisch verformt, so dass die Verkeilung zwischen dem ersten Schnappelement 301 und dem Absatz 601 gelöst wird. Während der Lösung der ersten Fixierung zwischen dem ersten Schnappelement 301 und dem Absatz 601 in der Aufnahmeöffnung kann die Diebstahlsicherungsvorrichtung 110 bzw. das Frontmodul 120 durch Ziehen entlang der ersten Richtung 103 voneinander gelöst werden. Ein Diebstahl des Frontmoduls 120 durch einen Benutzer, welcher nicht das Spezialwerkzeug zur Hand hat, ist daher nicht möglich.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Anordnung
- 101: Wand
- 102: Hohlraum
- 103: erste Richtung
- 104: zweite Richtung

- 110: Diebstahlsicherungsvorrichtung
- 111: erster Endabschnitt
- 112: zweiter Endabschnitt

- 120: Frontmodul
- 121: Funktionseinrichtung
- 122: Rahmen
- 123: Befestigungselement
- 124: Schmalseite
- 125: Zugangsöffnung

- 130: Trägermodul
- 131: Anschlusselement

- 200: System

- 301: erstes Schnappelement
- 302: zweites Schnappelement

- 601: Absatz/Widerhaken

## Patentansprüche

1. Anordnung (100) umfassend
ein Frontmodul (120) zum Anbringen an einem an einer Wand (101) befestigbaren Trägermodul (130),
eine Einrichtung zur diebstahlsicheren Fixierung des Frontmoduls (120) an einem an einer Wand (101) befestigbaren Trägermodul (130), die Einrichtung aufweisend
eine Diebstahlsicherungsvorrichtung (110),
wobei die Diebstahlsicherungsvorrichtung (110) derart ausgebildet ist,
dass mittels dieser das Frontmodul (120) und ein Trägermodul (130) miteinander fixierbar sind, und
dass die Diebstahlsicherungsvorrichtung (110) von dem Frontmodul (120) und/oder von einem Trägermodul (130) ausschließlich mittels eines Spezialwerkzeugs lösbar ist,
wobei das Frontmodul (120) eine Zugangsöffnung (125) aufweist, und
wobei das Frontmodul (120) derart die Diebstahlsicherungsvorrichtung (110) umgibt, dass die Diebstahlsicherungsvorrichtung (110) von dem Spezialwerkzeug zur Lösung der Diebstahlsicherungsvorrichtung (110) ausschließlich durch die Zugangsöffnung (125) erreichbar ist,
wobei die Diebstahlsicherungsvorrichtung (110) einen ersten Endabschnitt (111) und einen zweiten Endabschnitt (112) aufweist,
wobei der ersten Endabschnitt (111) derart ausgeformt ist, dass mit einem ersten Befestigungsbereich des Frontmoduls (120) eine erste Fixierung herstellbar ist,
wobei der zweite Endabschnitt (112) derart ausgeformt ist, dass mit einem zweiten Befestigungsbereich eines Trägermoduls (130) eine zweite Fixierung herstellbar ist, und
wobei der erste Endabschnitt (111) und/oder der zweite Endabschnitt (112) derart ausgebildet sind, dass die erste Fixierung und/oder die zweite Fixierung ausschließlich mittels des Spezialwerkzeugs lösbar ist,
**dadurch gekennzeichnet, dass**
der erste Endabschnitt (111) ein erstes Schnappelement (301) aufweist, und
wobei das erste Schnappelement (301) derart ausgebildet ist, dass dieses in dem ersten Befestigungsbereich des Frontmoduls (120) einschnappbar ist.

2. Anordnung (100) gemäß Anspruch 1,
wobei der zweite Endabschnitt (112) ein zweites Schnappelement (302) aufweist, und
wobei das zweite Schnappelement (302) derart ausgebildet ist, dass dieses in dem zweiten Befestigungsbereich des Trägermoduls (130) einschnappbar ist.

3. Anordnung (100) gemäß Anspruch 1,
wobei der zweite Endabschnitt (112) derart ausgebildet ist, dass dieser in dem zweiten Befestigungsbereich eines Trägermoduls (130) einschraubbar ist.

4. Anordnung (100) gemäß Anspruch 1,
wobei die Zugangsöffnung (125) eine Querschnittsform ausformt, welche an eine Profilform des Spezialwerkzeugs derart angepasst ist, dass ausschließlich mittels des Spezialwerkzeugs die Diebstahlsicherungsvorrichtung (110) durch die Zugangsöffnung (125) erreichbar ist.

5. Anordnung (100) gemäß Anspruch 1,
wobei das Frontmodul (120) eine Schmalseite (124) aufweist, in welcher die Zugangsöffnung (125) ausgeformt ist.

6. Anordnung (100) gemäß einem der Ansprüche 4 bis 5,
wobei das Frontmodul (120) eine Aufnahmeöffnung zur Aufnahme der Diebstahlsicherungsvorrichtung (110) aufweist,
wobei die Aufnahmeöffnung derart ausgebildet ist, dass die Diebstahlsicherungsvorrichtung (110) entlang einer ersten Richtung (103) in die Aufnahmeöffnung einschiebbar ist,
wobei die Zugangsöffnung derart ausgebildet ist, dass das Spezialwerkzeug entlang einer zweiten Richtung (104) in die Zugangsöffnung (125) einschiebbar ist, und
wobei die Aufnahmeöffnung und die Zugangsöffnung (125) derart ausgebildet sind, dass sich die erste Richtung (103) von der zweiten Richtung (104) unterscheidet.

7. System (200) zum Befestigen an einer Wand (101), aufweisend
ein Trägermodul (130), welches zur Befestigung an der Wand (101) ausgebildet ist, und
eine Anordnung (100) gemäß einem der Ansprüche 1 bis 6.

8. System (200) gemäß Anspruch 7,
wobei das Trägermodul (130) zur Befestigung an der Wand (101) derart ausgebildet ist, dass mittels des Trägermoduls (130) ein Hohlraum (102) in der Wand (101) abdeckbar ist.

9. System (200) gemäß Anspruch 7 oder 8,
wobei das Frontmodul (120) eine Funktionseinrichtung (121) aufweist,
wobei das Trägermodul (130) ein Anschlusselement (131) aufweist, und
wobei die Funktionseinrichtung (121) an dem Anschlusselement (131) zur Signalübertragung anschließbar ist.

10. System (200) gemäß Anspruch 9,
wobei das Anschlusselement (131) derart eingerichtet ist, dass eine Leitung, welche zwischen der Wand (101) und dem Anschlusselement (131) verläuft, zur Signalübertragung anschließbar ist, und
wobei das Anschlusselement (131) derart eingerichtet ist, dass die Funktionseinrichtung (121) von außerhalb der Wand (101) an das Anschlusselement (131) anschließbar ist.

## Claims

1. Arrangement (100) comprising
a front module (120) for fitting to a carrier module (130) able to be attached to a wall (101),
a device for anti-theft fixing of the front module (120) to a carrier module (130) able to be attached to a wall (101), said device comprising
an anti-theft facility (110),
wherein the anti-theft facility (110) is embodied,
so that by means of said facility the front module (120) and a carrier module (130) are able to be fixed to one another, and
that the anti-theft facility (110) is exclusively able to be released from the front module (120) and/or a carrier module (130) by means of a special tool,
wherein the front module (120) has an access opening (125), and
wherein the front module (120) surrounds the anti-theft facility (110) such that the anti-theft facility (110) is able to be reached by the special tool for releasing the anti-theft facility (110) exclusively through the access opening (125)
wherein the anti-theft facility (110) has a first end section (111) and a second end section (112),
wherein the first end section (111) is shaped such that a first fixing is able to be established to a first attachment area of the front module (120),
wherein the second end section (112) is shaped such that a second fixing is able to be established to a second attachment area of a carrier module (130), and
wherein the first end section (111) and/or the second end section (112) are embodied such that the first fixing and/or the second fixing is able to be released exclusively by means of the special tool
**characterised in that**
the first end section (111) has a first snap-on element (301), and
wherein the first snap-on element (301) is embodied such that said element is able be snapped onto the first attachment area of the front module (120).

2. Arrangement according to claim 1,
wherein the second end section (112) has a second snap-on element (302), and
wherein the second snap-on element (302) is embodied such that said element is able to be snapped onto the second attachment area of the carrier module (130).

3. Arrangement according to claim 1,
wherein the second end section (112) is embodied such that said section is able to be screwed into the second attachment area of a carrier module (130).

4. Arrangement (100) according to claim 1,
wherein the access opening (125) forms a cross-sectional shape which is matched to a profile shape of the special tool such that the anti-theft facility (110) is able to be reached through the access opening (125) exclusively by means of the special tool.

5. Arrangement (100) according to claim 1,
wherein the front module (120) has a narrow side (124) in which the access opening (125) is formed.

6. Arrangement (100) according to one of claims 4 to 5,
wherein the front module (120) has a receptacle opening to accommodate the anti-theft facility (110),
wherein the receptacle opening is embodied such that the anti-theft facility (110) is able to be inserted in a first direction (103) into the receptacle opening,
wherein the access opening is embodied such that the special tool is able to be inserted in a second direction (104) into the access opening (125), and
wherein the receptacle opening and the access opening (125) are embodied such that the first direction (103) differs from the second direction (104).

7. System (200) for attaching to a wall (101), comprising
a carrier module (130) which is embodied for attachment to the wall (101), and
an arrangement (100) as claimed in one of claims 1 to 6.

8. System (200) according to claim 7,
wherein the carrier module (130) for attaching to the wall (101) is embodied such that a cavity (102) in the wall (101) is able to be covered by means of the carrier module (130).

9. System (200) according to claim 7 or 8,
wherein the front module (120) features a function device (121),
wherein the carrier module (130) features a connecting element (131), and
wherein the function device (121) is able to be connected to the connecting element (131) for signal transmission.

10. System (200) according to claim 9,
wherein the connecting element (131) is configured such that a line which runs between the wall (101) and the connecting element (131) is able to be connected for signal transmission, and
wherein the connecting element (131) is configured such that the function device (121) is able to be connected from outside the wall (101) to the connecting element (131).

## Revendications

1. Ensemble (100) comprenant :
un module frontal (120) destiné à être fixé sur un module de support (130) lequel peut être fixé à un mur (101),
un moyen permettant la fixation sécurisée contre le vol du module frontal (120) sur un module de support (130) pouvant être fixé à un mur (101), le moyen comprenant :
un dispositif de protection contre le vol (110),
le dispositif de protection contre le vol (110) étant réalisé de telle sorte
qu'il permet de fixer l'un sur l'autre le module frontal (120) et un module de support (130), et
que le dispositif de protection contre le vol (110) ne peut être séparé du module frontal (120) et/ou d'un module de support (130) qu'au moyen d'un outil spécial,
le module frontal (120) ayant une ouverture d'accès (125), et
le module frontal (120) enveloppant le dispositif de protection contre le vol (110) de telle sorte que le dispositif de protection contre le vol (110) n'est accessible par l'outil spécial destiné à séparer le dispositif de protection contre le vol (110) qu'à travers l'ouverture d'accès (125),
le dispositif de protection contre le vol (110) ayant une première portion d'extrémité (111) et une seconde portion d'extrémité (112),
la première portion d'extrémité (111) étant conformée de telle sorte qu'il est possible de réaliser avec une première partie de fixation du module frontal (120) une première fixation,
la seconde portion d'extrémité (112) étant conformée de telle sorte qu'il est possible de réaliser avec une seconde partie de fixation d'un module de support (130) une seconde fixation, et
la première portion d'extrémité (111) et/ou la seconde portion d'extrémité (112) étant réalisées de telle sorte que la première fixation et/ou la seconde fixation ne peuvent être défaites qu'au moyen de l'outil spécial,
**caractérisé en ce que**
la première portion d'extrémité (111) comprend un premier élément d'encliquetage (301), et
le premier élément d'encliquetage (301) étant réalisé de telle sorte qu'il peut s'encliqueter dans la première partie de fixation du module frontal (120).

2. Ensemble (100) selon la revendication 1,
la seconde portion d'extrémité (112) comprenant un second élément d'encliquetage (302), et
le second élément d'encliquetage (302) étant réalisé de telle sorte qu'il peut s'encliqueter dans la seconde partie de fixation du module de support (130).

3. Ensemble (100) selon la revendication 1,
la seconde portion d'extrémité (112) étant réalisée de telle sorte qu'elle peut être vissée dans la seconde partie de fixation d'un module de support (130).

4. Ensemble (100) selon la revendication 1,
l'ouverture d'accès (125) ayant une forme en coupe transversale adaptée à une forme de profil de l'outil spécial de telle sorte que le dispositif de protection contre le vol (110) n'est accessible à travers l'ouverture d'accès (125) que par l'outil spécial.

5. Ensemble (100) selon la revendication 1,
le module frontal (120) ayant un petit côté (124) dans lequel est formé l'ouverture d'accès (125).

6. Ensemble (100) selon l'une des revendications 4 à 5,
le module frontal (120) ayant une ouverture de réception servant à recevoir le dispositif de protection contre le vol (110),
l'ouverture de réception étant réalisée de telle sorte que le dispositif de protection contre le vol (110) peut être introduit dans l'ouverture de réception selon une première direction (103),
l'ouverture d'accès étant réalisée de telle sorte que l'outil spécial peut être introduit dans l'ouverture d'accès (125) selon une seconde direction (104), et
l'ouverture de réception et l'ouverture d'accès (125) étant réalisées de telle sorte que la première direction (103) est différente de la seconde direction (104).

7. Système (200) destiné à être fixé à un mur (101), comprenant
un module de support (130), conçu pour être fixé au mur (101), et
un ensemble (100) selon l'une des revendications 1 à 6.

8. Système (200) selon la revendication 7,
le module de support (130) destiné à être fixé au mur (101) étant réalisé de telle sorte qu'une cavité (102) dans le mur (101) peut être recouverte au moyen du module de support (130).

9. Système (200) selon la revendication 7 ou 8,
le module frontal (120) comprenant un dispositif fonctionnel (121),
le module de support (130) comprenant un élément de connexion (131), et
le dispositif fonctionnel (121) pouvant être raccordé à l'élément de connexion (131) pour la transmission de signaux.

10. Système (200) selon la revendication 9,
l'élément de connexion (131) étant agencé de telle sorte qu'une ligne passant entre le mur (101) et l'élément de connexion (131) peut être raccordée pour la transmission de signaux, et
l'élément de connexion (131) étant agencé de telle sorte que le dispositif fonctionnel (121) peut être raccordé à l'élément de connexion (131) depuis l'extérieur du mur (101).
